# FASCICULE DE BREVET EUROPEEN

(11) **EP 0 693 362 B1**
(45) Date de publication et mention de la délivrance du brevet: **01.10.1997**
(21) Numéro de dépôt: 95401732.3
(22) Date de dépôt: 21.07.1995
(51) Int. Cl.: B29C 70/34, B29C 43/34

(54) **Procédé pour réaliser des pièces en au moins deux matières thermoplastiques**
Verfahren zur Herstellung von Gegenständen aus wenigstens zwei thermoplastischen Materialien
Method for making objects from at least two thermoplastic materials

(30) Priorité: 21.07.1994 FR 9409040
(43) Date de publication de la demande: 24.01.1996
(73) Titulaire: COMPAGNIE PLASTIC OMNIUM Société Anonyme dite:, 69007 Lyon (FR)
(72) Inventeur: Gille, Denis, F-01810 Bellignat (FR); Girardot, Ludovic, F-52200 Langres (FR)
(74) Mandataire: Leszczynski, André

(56) Documents cités:
- EP-A- 0 547 625
- FR-A- 2 443 912
- PATENT ABSTRACTS OF JAPAN vol. 9 no. 330 (M-442) ,25 Décembre 1985 & JP-A-60 162615 (KODAMA KAGAKU KOGYO) 24 Août 1985,

## Description

La présente invention concerne un procédé pour réaliser des pièces en au moins deux matières thermoplastiques.

Les pièces en matière thermoplastique présentent un certain nombre d'avantages, notamment quant à leur mode de fabrication, leur légèreté et leur stabilité dans le temps.

Toutefois, elles présentent l'inconvénient important de ne pas pouvoir résister à de fortes contraintes mécaniques.

Pour remédier à cet inconvénient, on a déjà proposé de leur ajouter des nervures, de les surdimensionner ou de les surmouler sur un insert métallique, mais ces solutions impliquent, pour les pièces ainsi obtenues, une augmentation de volume ou de poids ainsi qu'un prix de revient élevé.

Comme décrit dans le document FR-A-244 39 12 et la première partie de la revendication 1, on a également tenté de réaliser des pièces en deux matières thermoplastiques, en procédant successivement au moulage de la première matière thermoplastique, puis au moulage de la seconde matière thermoplastique.

Toutefois, cette solution implique une augmentation importante du temps de fabrication, et donc une élévation importante du coût.

La présente invention vise à proposer un procédé simple et peu coûteux qui permet de fabriquer des pièces en au moins deux matières thermoplastiques différentes, ce qui permet notamment de les renforcer localement.

Le procédé selon l'invention est en outre d'une mise en oeuvre particulièrement simple et économique.

La présente invention a pour objet un procédé pour mouler une pièce en au moins deux matières thermoplastiques différentes, selon lequel on apporte, à certains endroits du moule ouvert une première matière thermoplastique, de forte viscosité à la température de moulage, et une seconde matière thermoplastique, de faible viscosité à la température de moulage, les deux matières thermoplastiques étant aptes à se souder lors du moulage et étant présentes en quantités suffisantes pour, ensemble, remplir le moule, et les deux matières thermoplastiques sont extrudées simultanément dans le moule.

Le procédé selon la présente invention consiste à introduire simultanément dans un même moule deux matières thermoplastiques de viscosités notablement différentes, en prenant soin de déposer ces deux matières thermoplastiques à l'endroit où l'on désire voir demeurer la matière thermoplastique de forte viscosité.

A cet effet, on peut utiliser, selon un mode de realisation de l'invention, une tête d'extrusion coaxiale ou bicouche, que l'on déplace dans le moule ouvert avant de la refermer pour mouler la pièce.

Des modes préférés de mise en oeuvre de l'invention sont décrits dans les revendications dépendentes 2 à 5.

Des expérimentations menées par la société demanderesse ont montré que la matière thermoplastique de faible viscosité ne déplaçait que légèrement la matière thermoplastique de forte viscosité en se répandant dans le reste du moule, alors que les fortes pressions mises en jeu, qui sont de l'ordre de plusieurs centaines de Kg par cm² laissent plutôt présager que les deux matières thermoplastiques fluent de façon aléatoire et se répandent dans tout le moule.

Ces expérimentations avaient pour but de confirmer une constatation que la société demanderesse avait pu faire par hasard, en remplaçant une première matière plastique par une seconde matière plastique dans une vis d'extrudeuse.

Lors de la période transitoire pendant laquelle la première matière plastique n'était pas encore complètement rincée par la seconde matière plastique, la tête d'extrusion délivrait un coextrudat formé des deux matières plastiques.

En moulant une pièce constituée par cet extrudat, la société demanderesse avait constaté que l'une des deux matières plastiques était nettement restée à l'endroit où l'extrudat avait été déposé, tandis que l'autre matière plastique avait flué pour remplir le reste du moule.

Les expérimentations ultérieures ont confirmé cette possibilité.

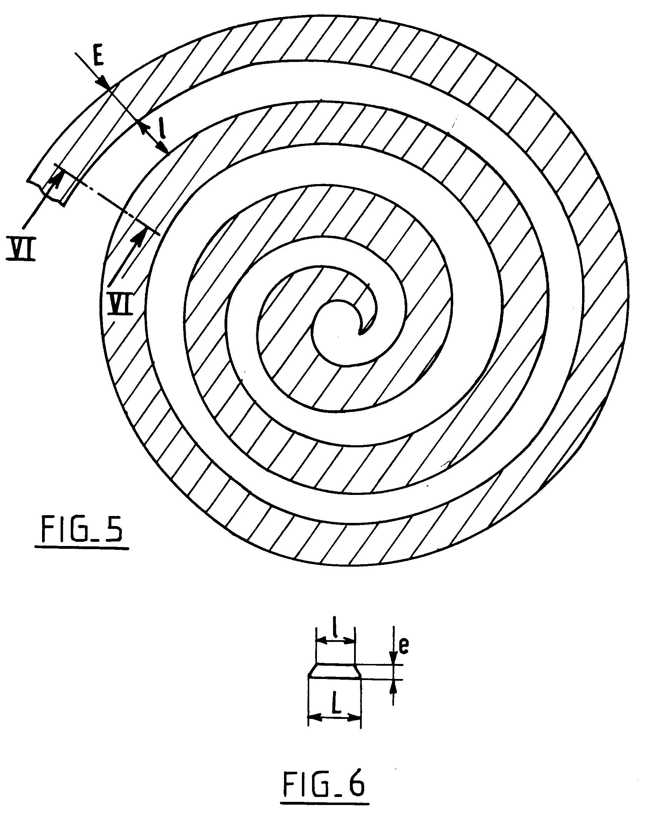

Selon un mode de mise en oeuvre préféré de l'invention, il est avantageux d'utiliser une première matière thermoplastique qui présente, à la température de moulage, une viscosité telle qu'elle a une longueur de flux d'environ 100 mm et une seconde matière thermoplastique qui présente, à la température de moulage, une viscosité telle qu'elle a une longueur de flux minimale de 600 mm, ces valeurs de longueur de flux étant définies, pour chaque matière plastique, comme étant la distance parcourue par la matière thermoplastique injectée à une pression de 1,2.10⁸ Pa dans un moule en forme de spirale tel que représenté sur les figures 5 et 6.

Cette spirale comporte trois enroulements espacés d'un écart E de 10 mm. Le canal de la spirale, visible sur la vue en coupe de la figure 6, présente une section trapézoïdale d'épaisseur e égale à 3 mm, de petite base 1 égale à 10 mm et de grande base L égale à 11 mm.

On comprend que le procédé selon l'invention permet notamment de résoudre de façon économique le problème de la résistance mécanique des pièces en matière thermoplastique.

En effet, pour renforcer localement une pièce, il suffit de la réaliser par mise en oeuvre du procédé selon l'invention, en prenant comme matière thermoplastique de forte viscosité, une matière thermoplastique, éventuellement assez coûteuse, qui présente, à l'état refroidi, une résistance mécanique importante, et comme matière thermoplastique de faible viscosité, une matière thermoplastique peu onéreuse et apte à se souder pendant le moulage à la matière de forte viscosité destinée à constituer les parties non renforcées de la pièce à réaliser.

A titre d'exemples de matières thermoplastiques qui présentent une bonne résistance mécanique à l'état refroidi, on peut citer celles chargées de fibres de renfort.

De façon non limitative, on peut utiliser à cet effet, du lin, du carbone, du kevlar, du verre ou du polypropylène.

Ces fibres peuvent être courtes ou longues et orientées de façon isotrope ou selon une direction donnée.

La matière thermoplastique renforcée peut également être obtenue par coextrusion de fibres de renfort avec de la matière thermoplastique.

Dans ce cas, l'extrudat obtenu est lui-même co-extrudé avec la matière plastique de faible viscosité, d'une manière telle que les fibres de renfort soient dirigées selon les lignes de sollicitation de la pièce à réaliser.

L'utilisation d'une matière thermoplastique renforcée présente l'avantage que l'apport des fibres de renfort contribue non seulement à augmenter la résistance mécanique de cette matière thermoplastique renforcée à l'état refroidi, mais également à accroître la viscosité de cette matière thermoplastique à la température de moulage, de sorte que la même matière thermoplastique, mais non chargée, peut être utilisée comme matière thermoplastique de faible viscosité, du fait de la différence notable de viscosité qui existe entre la matière thermoplastique chargée et la matière thermoplastique non chargée.

Le procédé selon l'invention est également approprié pour réaliser des pièces en matière thermoplastique qui présentent par endroits une bonne résistance thermique.

D'une manière générale, le procédé selon l'invention convient pour réaliser, d'une manière simple et économique, des pièces qui présentent localement des propriétés particulières.

Il suffit pour cela de choisir une matière thermoplastique de forte viscosité à la température de moulage, qui présente les propriétés recherchées à l'état refroidi, et une matière thermoplastique de faible viscosité, de préférence peu onéreuse, et apte à se souder lors du moulage à la matière de forte viscosité qui permet de réaliser les parties complémentaires de la pièce moulée.

L'invention présente également l'avantage que le procédé de moulage peut être exécuté dans un temps très court, dans la mesure où les deux matières thermoplastiques sont déposées dans le même temps que celui qui serait nécessaire pour déposer une seule matière plastique.

De préférence, on dépose la matière thermoplastique de forte viscosité directement contre la paroi du moule, c'est-à-dire en évitant d'intercaler une couche de matière thermoplastique peu visqueuse entre le moule et ladite matière thermoplastique de forte viscosité.

Selon un mode particulier de mise en oeuvre, on utilise la technique dite d'injection-compression. Pour cela, on ferme partiellement le moule, et l'on injecte les deux matières thermoplastiques en quantité appropriée au travers d'orifices d'injection débouchant aux endroits prédéterminés du moule.

Ce type d'injection peut en fait être considéré comme une extrusion du fait que la matière thermoplastique est soumise à la pression atmosphérique dès qu'elle arrive dans le moule, ce qui est le cas d'une extrusion.

La fermeture complète du moule intervient alors après l'injection, son remplissage s'effectuant par fluage de la matière thermoplastique de faible viscosité.

On peut également, selon ce mode de réalisation, fermer le moule en même temps que l'on y injecte les deux matières thermoplastiques.

Dans le but de mieux faire comprendre l'invention, on va en décrire maintenant un mode de réalisation donné à titre d'exemple non limitatif en référence au dessin annexé dans lequel :
- la figure 1 représente schématiquement, vu de dessous et en perspective un carénage de moteur de véhicule automobile,
- la figure 2 est une vue en coupe d'un moule en deux parties permettant la réalisation du carénage de moteur de la figure 1, prise selon un plan de coupe correspondant, sur le carénage, au plan II-II de la figure 1,
- la figure 3 est une vue analogue à la figure 2 illustrant une première étape de mise en oeuvre du procédé selon l'invention,
- la figure 4 est une vue analogue à la figure 2 illustrant une seconde étape de mise en oeuvre du procédé selon l'invention, et
- les figures 5 et 6 représentent un moule en forme de spirale permettant de déterminer la longueur de flux des matières thermoplastiques.

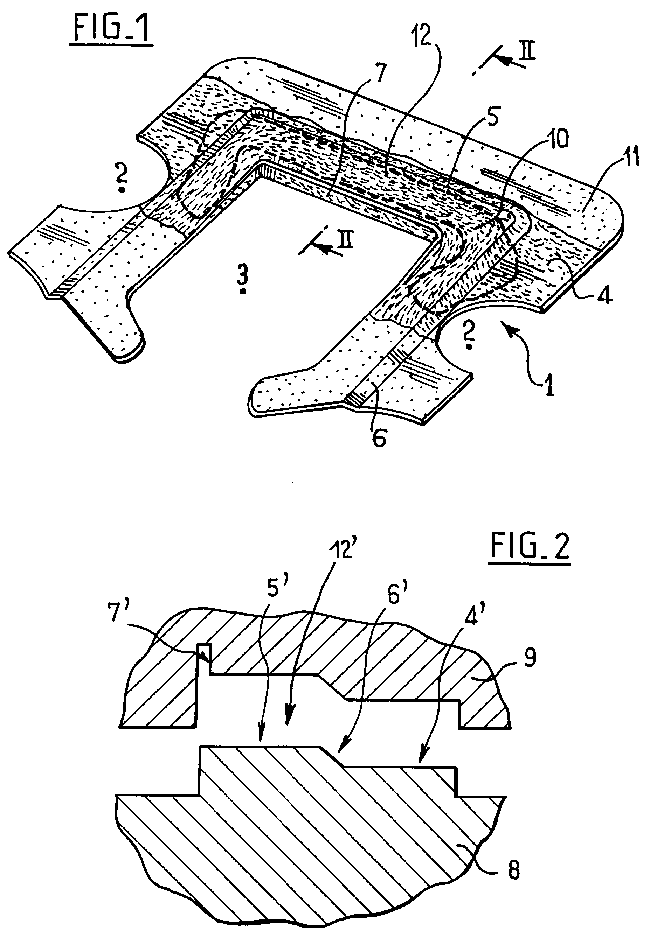

La figure 1 représente un carénage de moteur de véhicule automobile qui est une pièce destinée à être disposée en-dessous de l'ensemble moteur pour le protéger des projections pouvant provenir de la chaussée.

Ce carénage se présente sous la forme d'une plaque 1 qui comporte deux évidements latéraux 2 pour le passage des suspensions et un évidement central 3 ouvert vers l'arrière pour le passage du fond du bloc moteur.

Le carénage illustré comporte deux parties horizontales planes, l'une périphérique et basse par rapport au dessin 4 et l'autre interne et haute par rapport au dessin 5, réunies par une portion inclinée 6.

Cette configuration du carénage a pour but de lui conférer une certaine rigidité.

Le bord interne avant du carénage comporte un rebord 7 dirigé vers le haut par rapport au dessin.

L'ensemble du carénage est traditionnellement moulé en une seule opération.

Des perçages non représentés peuvent être ultérieurement réalisés pour permettre la fixation du carénage au châssis du véhicule.

La figure 2 est une vue en coupe du moule permettant la réalisation du carénage illustré, prise dans un plan correspondant au plan II-II de la figure 1.

Dans la position représentée sur cette figure, le moule se trouve en position semi-ouverte, c'est-à-dire que ses parties inférieure 8 et supérieure 9 sont espacées l'une de l'autre.

On retrouve, dans l'empreinte du moule, la région 7' correspondant au rebord 7, la région 5' correspondant à la partie plane haute 5, la région 6' correspondant à la portion inclinée 6 et la région 4' correspondant à la partie plane basse du carénage.

Conformément à l'invention, on apporte par co-extrusion deux matières thermoplastiques de viscosités différentes et aptes à se souder aux endroits du moule correspondant à la partie 12 du carénage que l'on désire renforcer mécaniquement.

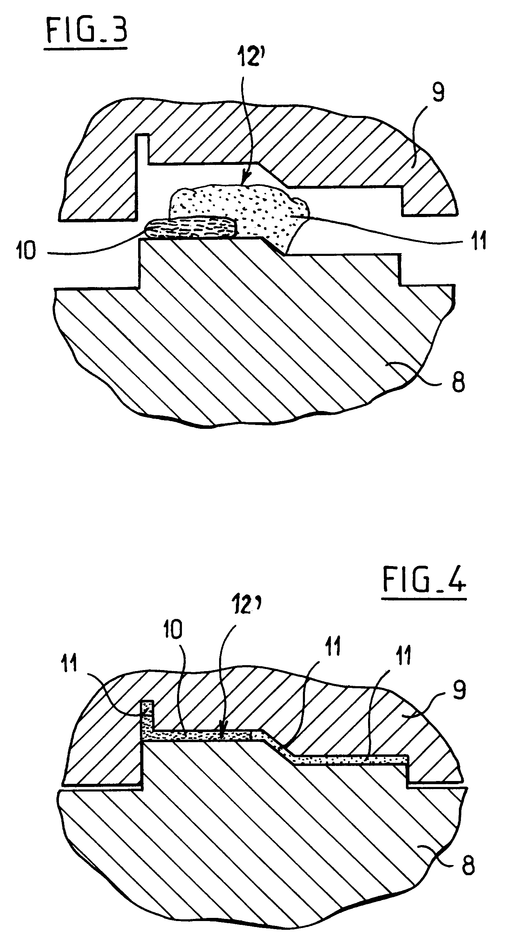

De ce fait, comme représenté sur la figure 3, on dépose les deux matières thermoplastiques 10,11 par extrusion simultanée dans la zone 12' du moule, à l'aide d'une tête d'extrusion bicouche mobile non représentée qui comporte deux canaux d'alimentation.

La surface initialement occupée par le co-extrudat est délimitée en trait interrompu sur la figure 1.

Le déplacement de la tête d'extrusion le long de la zone 12' du moule permet de disposer les fibres de renfort orientées de la première matière thermoplastique 10 parallèlement au bord du carénage 1.

A titre d'exemple de couples de matières thermoplastiques utilisables pour réaliser le carénage illustré, on peut citer les produits suivants :

| EXEMPLE N° | 1ere Matière thermoplastique a forte viscosité | 2ème Matière thermoplastique a faible viscosité |
|---|---|---|
| 1 | polypropylène chargé de fibres longues de renfort | polypropylène |
| 2 | polypropylène chargé de fibres longues de renfort | polypropylène chargé de fibres courtes. |
| 3 | polypropylène chargé de fibres longues de renfort | polypropylène régénéré ou rebroyé. |
| 4 | polyamide chargé de fibres longues de renfort | polyamide |
| 5 | SMA chargé de fibres longues | SMA |

Comme on le voit sur la figure 3, la première matière thermoplastique 10, est apportée dans le moule en quantité inférieure à la seconde matière thermoplastique 11.

Les deux matières sont ici déposées côte à côte sur le moule, de sorte que la matière thermoplastique de forte viscosité 10 se trouve directement au contact du moule.

La proportion entre les quantités de première et de seconde matières thermoplastiques est déterminée en fonction de la proportion que l'on désire voir apparaître dans la pièce finale après refroidissement des matières thermoplastiques.

Dans le cas présent, on apporte environ 2,5 fois plus de seconde matière thermoplastique 11 que de première matière thermoplastique 10.

Conformément à l'invention, la quantité totale de matière thermoplastique apportée dans le moule doit être sensiblement égale ou légèrement supérieure au volume de la pièce que l'on désire réaliser, étant entendu que le retrait des matières plastiques doit être pris en compte.

Après qu'une quantité suffisante des deux matières thermoplastiques a été déposée dans le moule ouvert, on referme ce dernier, ce qui provoque le fluage des deux matières thermoplastiques, comme illustré à la figure 4.

Conformément à l'invention, la différence notable de viscosité entre les deux matières thermoplastiques conduit la première à demeurer sensiblement dans la zone 12' du moule, tandis que la seconde remplit le reste du moule.

Après durcissement des deux matières thermoplastiques, on obtient le carénage représenté à la figure 1, sur lequel on voit clairement que la matière thermoplastique renforcée 10 se situe majoritairement dans la partie 12 du carénage, tandis que la matière thermoplastique non renforcée 11 constitue le reste du carénage.

Du fait que les deux matières thermoplastiques sont déposées dans le moule par extrusions simultanées, l'opération de dépôt n'est pas plus longue que si le carénage était constitué d'une seule matière thermoplastique.

En d'autres termes, la mise en oeuvre du procédé selon illustré permet, sans rallonger le cycle de fabrication, donc sans en augmenter le coût de façon sensible, de réaliser un carénage composé de deux matières thermoplastiques qui présente une excellente résistance mécanique.

Il est bien entendu que le mode de mise en oeuvre qui vient d'être décrit ne présente aucun caractère limitatif et qu'il pourra recevoir toutes modifications désirables sans sortir pour cela du cadre de l'invention comme décrit dans les revendications annexées.

## Revendications

1. Procédé pour mouler une pièce en au moins deux matières thermoplastiques différentes, selon lequel on apporte, à certains endroits du moule ouvert (8,9), une première matière thermoplastique (10), de forte viscosité à la température de moulage, et une seconde matière thermoplastique (11), de faible viscosité à la température de moulage, les deux matières thermoplastiques (10,11) étant aptes à se souder lors du moulage et étant présentes en quantités suffisantes pour, ensemble, remplir le moule (8,9), caractérisé par le fait que les deux matières thermoplastiques sont extrudées simultanément dans le moule (8,9).

2. Procédé selon la revendication 1, caractérisé par le fait que lors de l'extrusion des deux matières thermoplastiques, la matière thermoplastique de forte viscosité (10) est déposée directement contre la paroi du moule (8,9).

3. Procédé selon l'une quelconque des revendications 1 à 2, appliqué à la réalisation de pièces localement renforcées, caractérisé par le fait que l'on utilise, comme matière thermoplastique de forte viscosité, une matière thermoplastique qui présente à l'état refroidi une résistance mécanique importante.

4. Procédé selon la revendication 3, caractérisé par le fait que l'on utilise comme matière thermoplastique de forte viscosité (10), une matière thermoplastique chargée de fibres de renfort telles que du lin, du carbone, du kevlar, du verre ou du polypropylène.

5. Procédé selon la revendication 3, caractérisé par le fait que l'on utilise comme matière thermoplastique de forte viscosité (10), un coextrudat de fibres de renfort et de matière thermoplastique.

## Claims

1. Process for moulding a part made of at least two different thermoplastics, in which a first thermoplastic (10), having a high viscosity at the moulding temperature, and a second thermoplastic (11), having a low viscosity at the moulding temperature, are brought to certain points in the open mould (8, 9), the two thermoplastics (10, 11) being capable of fusing together during the moulding and being present, together, in sufficient quantities to fill the mould (8, 9), characterized in that the two thermoplastics are extruded simultaneously into the mould (8, 9).

2. Process according to Claim 1, characterized in that during the extrusion of the two thermoplastics the high-viscosity thermoplastic (10) is deposited directly against the wall of the mould (8, 9).

3. Process according to either of Claims 1 and 2, applied to the production of locally reinforced parts, characterized in that a thermoplastic having a high mechanical strength in the cold state is used as the high-viscosity thermoplastic.

4. Process according to Claim 3, characterized in that a thermoplastic filled with reinforcing fibres, such as flax, carbon, kevlar, glass or polypropylene fibres, is used as the high-viscosity thermoplastic (10).

5. Process according to Claim 3, characterized in that a coextrudate of reinforcing fibres and of thermoplastic is used as the high-viscosity thermoplastic (10).

## Patentansprüche

1. Verfahren zum Formen eines Gegenstands aus mindestens zwei verschiedenen thermoplastischen Materialien, gemäß dem man bestimmten Stellen der offenen Form (8, 9) ein erstes thermoplastisches Material (10) mit hoher Viskosität bei der Verformungstemperatur und ein zweites thermoplastisches Material (11) mit niedriger Viskosität bei der Verformungstemperatur zuführt, wobei die beiden thermoplastischen Materialien (10, 11) dazu in der Lage sind, bei der Verformung zu verschmelzen und in zur Ausfüllung der Form (8, 9) ausreichenden Mengen vorhanden sind, dadurch gekennzeichnet, daß die beiden thermoplastischen Materialien (10, 11) gleichzeitig in die Form (8, 9) extrudiert werden.

2. Verfahren nach Anspruch 1, dadurch gekennzeichnet, daß bei der Extrusion der beiden thermoplastischen Materialien das thermoplastische Material mit hoher Viskosität (10) direkt gegen die Wand der Form (8, 9) abgeschieden wird.

3. Verfahren nach irgendeinem der Ansprüche 1 bis 2 zur Ausbildung von lokal verstärkten Gegenständen, dadurch gekennzeichnet, daß man als thermoplastisches Material mit hoher Viskosität ein thermoplastisches Material verwendet, welches in abgekühltem Zustand eine erhebliche mechanische Festigkeit besitzt.

4. Verfahren nach Anspruch 3, dadurch gekennzeichnet, daß man als thermoplastisches Material mit hoher Viskosität (10) ein mit Verstärkungsfasern, wie Leinen-, Kohlenstoff-, Kevlar-, Glas- oder Polypropylenfasern verstärktes thermoplastisches Material verwendet.

5. Verfahren nach Anspruch 3, dadurch gekennzeichnet, daß man als thermoplastisches Material mit hoher Viskosität (10) ein Coextrudat aus Verstärkungsfasern und thermoplastischem Material verwendet.
